# EUROPÄISCHE PATENTSCHRIFT

(11) **EP 1 108 609 B1**
(45) Veröffentlichungstag und Bekanntmachung des Hinweises auf die Patenterteilung: **17.09.2003**
(21) Anmeldenummer: 00127328.3
(22) Anmeldetag: 13.12.2000
(51) Int. Cl.: B60P 7/15

(54) **Vorrichtung zum Sichern von Ladegut auf der Ladefläche eines Fahrzeuges**
Device for securing goods on the platform of a transport vehicle
Dispositif permettant d'arrimer des charges sur le plateau d'un véhicule de transport

(30) Priorität: 13.12.1999 DE 29921823 U; 31.03.2000 DE 20005973 U; 22.07.2000 DE 20012731 U
(43) Veröffentlichungstag der Anmeldung: 20.06.2001
(73) Patentinhaber: ANCRA Jungfalk GmbH & Co. KG, 78234 Engen (DE)
(72) Erfinder: Stubbe, Ingolf, 78244 Gottmadingen (DE)
(74) Vertreter: Hiebsch, Gerhard F., Dipl.-Ing.

(56) Entgegenhaltungen:
- EP-A- 0 165 594
- EP-A- 0 258 193
- EP-A- 0 289 637
- WO-A-99/25583
- DE-A- 2 510 493
- DE-U- 9 204 539
- US-A- 3 680 711
- US-A- 4 079 677

## Beschreibung

Die Erfindung betrifft eine Vorrichtung zum Sichern von Stückgut auf der Ladefläche eines Fahrzeuges od.dgl. Einrichtung in Form eines balkenartigen Profils mit an ihm vorgesehenen Anschlussorganen, insbesondere eines -- bevorzugt stranggepressten -- Hohlprofils mit beidends angebrachten hakenähnlichen Anschlussorganen, an denen jeweils ein der Profilstirnkante gegenüberliegender Klemmsteg relativ zur Profilstirnkante bewegbar ist.

Die EP 0 159 394 B1 offenbart zur Sicherung von Kleidungsstücken od.dgl. Elementen horizontale Zurrschienen in einem Lastwagenaufbau. Davon ausgehend, beschreibt die DE 44 12 067 C der Anmelderin ein an den Fahrzeugseitenwänden in Abstand zur Ladefläche etwa horizontal vorgesehenes Paar von Führungsschienen, an die endwärtige Verbindungsorgane eines zwischen ihnen in Betriebsstellung verlaufenden Tragprofiles angeschlossen werden; dieses Tragprofil ist in Abstand zu einem Profilende mit einem strangartigen Lenker durch ein Gelenk verbunden und der Lenker andernends mittels eines weiteren Gelenkes ortsfest gelagert. Dieses Tragprofil kann um sein Gelenk und der Lenker um das weitere Gelenk aus einer Betriebsstellung in eine Ruhelage geklappt sowie mittels des endwärtigen Gelenkes an die eine Führungsschiene angefügt werden.

Bekannt ist zudem ein -- infolge einschiebbarer Zwischenrohre -- teleskopartig verlängerbar ausgebildetes Hohlprofil mit beidends vorgesehenen Haken als sog. Zwischenwandverschluss, zwischen dessen einen Hakenschenkel und die dazu etwa parallel benachbarte Profilstirnkante eine zu dem hierbei entstehenden Spalt quer verlaufende Führungsschiene oder ein Wandelement eines Lastwagenaufbaus eingeschoben werden kann. Zum Erzeugen einer Klemmkraft kann jener -- an einem am Stabprofil vernieteten Zughebel angelenkte --. Haken abstandsveränderlich zu der mit dem Klemmschenkel ein Klemmmaul bildenden Profilstirnkante bewegt werden.

Eine Vorrichtung gemäss der Merkmalen des Oberbegriffes von Anspruch 1 ist aus DE-U-9 204 539 bekannt.

In Kenntnis dieses Standes der Technik hat sich der Erfinder das Ziel gesetzt, sowohl die Anpassung der eingangs beschriebenen Vorrichtung an die Gegebenheiten des Einsatzortes als auch ihre Herstellung und Handhabung zu verbessern. Zudem soll der Sitz des endwärtigen Spannelements am fahrzeugseitigen Anschlussorgan optimiert werden.

Zur Lösung dieser Aufgabe führt die Lehre des Kennzeichnenden Teiles des unabhängigen Anspruches; die Unteransprüche erfassen günstige Weiterbildungen. Zudem fallen in den Rahmen der Erfindung alle Kombinationen aus zumindest zwei der in der Beschreibung, der Zeichnung und/oder den Ansprüchen offenbarten Merkmale.

Erfindungsgemäß ist in das balkenartige Profil bzw. Hohlprofil der Vorrichtung endwärts ein Einschubkörper eines den Klemmsteg aufweisenden Spannelementes einführbar sowie im Profilinnenraum in Längsachse des Hohlprofils bewegbar gelagert; jener Klemmsteg kann nach einem weiteren Merkmal der Erfindung der Schenkel eines im Spannelement verschieblich geführten Winkelstückes sein. Dank dieser Maßgaben vermag man ein einstückiges Hohlprofil endwärts mit jeweils einem Spannelement auszurüsten, welches sowohl die Verspannung als auch die Längenanpassung der Vorrichtung ermöglicht.

Nach einem Merkmal der Erfindung ist im Profilinnenraum jenes Hohlprofils ein diesen querendes Staborgan -- insbesondere ein beidends im Hohlprofil festliegender Querbolzen -- angebracht. Dazu hat es sich als günstig erwiesen, zur Steuerung der Bewegung des Einschubkörpers diesen mit einer zur Längsachse des Hohlprofils etwa parallelen Kulisse auszustatten, in welcher jenes Staborgan geführt wird. Der Einschubkörper soll an dem Staborgan oder Querbolzen des Hohlprofils in der in der Längsachse des Hohlprofils verlaufenden Schubrichtung geführt werden; die Länge von dessen Schubweg wird dabei von die Kulisse beidseits begrenzenden Anschlagkanten bestimmt.

Vorteilhafterweise soll das Hohlprofil von rechteckigem Querschnitt sein sowie eine stegartige Wand des Einschubkörpers etwa in der Querschnittshauptachse des Einschubkörpers, also vertikal bzw. rechtwinkelig zu jener Längsachse, verlaufen; die stegartige Wand ist mit einem wenigstens teilweise polygonen Durchbruch versehen, der die Kulisse für den Querbolzen durch quer zur Schubrichtung verlaufende Kanten als Anschlagbegrenzung anbietet. Die Kulisse soll bevorzugt von einer Seitenkante des Durchbruches sowie einer dazu etwa parallelen Anschlagstufe der Firstkante des Durchbruches -- oder aber von zwei parallelen Durchbruchkanten -- begrenzt werden. Die Ausgestaltung des Einschubkörpers soll vorteilhafterweise I-förmig gewählt werden; die beiden Endflansche gleiten an Decken- und Bodenwand des Hohlprofils entlang, und im Vertikalsteg des I-Querschnitts ist der erwähnte Durchbruch angebracht.

Bei einer weiteren Ausgestaltung der Vorrichtung, für die gesondert Schutz begehrt wird, soll der Einschubkörper mit zumindest einem an ihm schwenkbar lagernden Rastelement versehen sein, das mit dem Staborgan oder Querbolzen des Hohlprofils zusammenwirkt; in letzterem soll der Einschubkörper in Stufen unterschiedlicher Einschublänge festgelegt werden können. Dieses Rastelement ist bevorzugt stegartig ausgebildet und mit von einer Längskante ausgehenden Randausnehmungen versehen; in eine von diesen kann der Querbolzen des Hohlprofils wahlweise eingesetzt werden.

Als günstig hat es sich erwiesen, das stegartige Rastelement außerhalb des Durchbruches an einem Achsbolzen des Einschubkörpers drehbar zu lagern; die Randausnehmungen gehen in einem dem Durchbruch des Einschubkörpers zugeordneten Bereich des Rastelementes in einem Rastmaß zueinander von dessen einer Längskante aus. Mehrere solcher Randausnehmungen sind in gleichem Rastmaß zueinander vorgesehen.

Nach einem weiteren Merkmal der Erfindung wird der Achsbolzen des Einschubkörpers parallel und um ein Maß zum Querbolzen des Hohlprofils höhenversetzt angebracht. Er ist an einer Ausformung der Heckkante des Einschubkörpers in Abstand zu des letzteren Längsachse vorgesehen.

Um das Einstellen der Vorrichtung zu erleichtern, soll das einends angelenkte streifenartige Rastelement andernends mit einer Handhabe -- insbesondere mit einer Abwinkelung -- versehen sein, dank deren man das freie Ende des Rastelementes oder -steges anheben kann; in seine den Querbolzen umfassende Rastposition fällt das Rastelement dank der Schwerkraft zurück. Im übrigen ist der Querbolzen in einem Abstand zur Profilstirnkante des Hohlprofils angeordnet, welcher etwa der halben Länge des Einschubkörpers bzw. der halben Länge des Durchbruches entspricht; diese Maßgabe verbessert die Anpassungsfähigkeit.

Das Zusammenwirken der beschriebenen Teile wird dadurch begünstigt, dass zumindest ein Abschnitt eines Firstflansches des Einschubkörpers einen Führungsspalt für eine diesem zugeordnete Firstwand des Hohlprofils begrenzt und dem Firstflansch parallel ein Steg des Spannelements gegenüberliegt. Im übrigen soll der Führungsspalt durch eine den Einschubkörper angefügte Querwand an seinem gegen die Einschubrichtung weisenden Spaltende verschlossen sein. Diese mit dem Einschubkörper bevorzugt einstückige Querwand begrenzt dessen Einschubweg, denn sie schlägt an die Profilstirnkante des Hohlprofils an. Der zum Firstflansch des Einschubkörpers parallele Steg kragt in Einschubrichtung beidseits über die Querwand hinaus.

Im Rahmen der Erfindung liegt noch ein weiterer Führungsspalt des Spannelements, der für einen darin bewegbaren Schenkel oder Lagersteg des Winkelstücks gedacht ist, dessen anderer Schenkel den Klemmsteg bildet. Dieser Führungsspalt ist zumindest an seinem gegen die Einschubrichtung weisenden Spaltende offen; soll er doch den in dieser herangebrachten Lagersteg des Winkelstückes aufnehmen.

Nach einem anderen Merkmal der Erfindung soll dem -- bezüglich der etwa parallelen Profilstirnkante -- hin und her bewegbaren Klemmsteg an dem ihm zugekehrten Ende des Einschubkörpers eine elastische Gegenklemmfläche gegenüberliegen, bevorzugt wenigstens ein in einem an der Querwand des Einschubkörpers vorgesehenen Aufnahmeraum sitzender Einsatz aus Hartgummi od.dgl. Werkstoff. Auch die letzterem zugekehrte Innenfläche des Klemmsteges kann mit dem elastischen Werkstoff beschichtet sein.

Bei einer bevorzugten Ausgestaltung ragt von der Gegenklemmfläche ein Abschnitt wenigstens eines Bolzens ab, der in eine Öffnung eines zwischen die Klemmpartner eingeschobenen Halteprofils -- etwa in Form eines in DE 297 06 258 U der Anmelderin beschriebenen sog. Airline-Profils -- eingreifen kann. Durch Schließen des erfindungsgemäßen Verschlusses wird der Bolzen in seiner bevorzugten Lage gehalten.

Um den Klemmvorgang zu steuern, ist an zumindest einer Lageranformung des Spannelementes -- an der dem Einschubkörper abgekehrten Seite der/des Führungsspalte/s -- mittels eines Schwenkbolzens ein in Richtung der erwähnten Querschnittshauptachse bewegbarer Schwenkhebel angeschlossen; mit diesem wird der veränderliche Abstand zwischen dem Klemmsteg einerseits und seiner Gegenklemmfläche anderseits eingestellt.

Nach einer weiteren vorteilhaften Maßgabe ragen von dem Spannelement Lagerlaschen auf, in denen ein das Lagerende des Schwenkhebels durchsetzender Schwenkbolzen sitzt. An den Schwenkhebel ist in Abstand zu dessen Anlenkstelle zudem ein Hebelarm angelenkt, der mittels eines Sockelendes mit dem Winkelstück gelenkig verbunden ist, vorteilhafterweise an dessen Knie. Der Hebelarm kann zum Einstellen der Spannkraft mit einem Kraftspeicher zusammenwirken, insbesondere von einer Schraubenfeder umfangen sein.

Das Lagerende des Schwenkhebels wird bevorzugt gabelartig gestaltet, und zwischen den beiden "Zinken" dieses Lagerendes ist jener Hebelarm angeordnet. In Klemmstellung soll der zwischen dem Winkelstück und dem Schwenkhebel verlaufende Hebelarm zum Schwenkhebel etwa parallel liegen und der Klemmsteg der Gegenfläche in kurzem Klemmabstand gegenüberstehen.

Beim Ausschwenken des Schwenkhebels aus der Klemmstellung fährt der Hebelarm schwenkend durch das Lagerende des Schwenkhebels hindurch oder er bewegt sich -- mangels gabelförmig gestaltetem Ende des Schwenkhebels -- im Falle paralleler Außenlagerung am Schwenkhebel vorbei.

Der Verstellbereich liegt beim Erfindungsgegenstand also nicht im Bereich des Hohlprofils sondern unmittelbar im endwärtig angefügten Anschlussorgan, das nur mittels des beschriebenen Querbolzens mit dem Hohlprofil -- in diesem begrenzt verschiebbar -- verbunden ist.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: eine Schrägsicht auf einen Teil einer Ladefläche eines Fahrzeuges mit Kastenaufbau sowie darin aufgespanntem profilartigen Zwischenwandverschluss;
- Fig. 2:: eine gegenüber Fig. 1 vergrößerte Schrägsicht auf ein Profil des Kastenaufbaus;
- Fig. 3:: den teilweise geschnittenen Zwischenwandverschluss in Seitenansicht sowie in einem Querschnitt (Pfeil Q) gemäß Linie Q-Q;
- Fig. 4:: ein vergrößertes Detail aus Fig. 3;
- Fig. 5:: ein anderes Detail in Verbindung mit einem Querschnitt des Profils der Fig. 2;
- Fig. 6, 8:: jeweils eine der Fig. 4 entsprechende Darstellung zu anderen Ausgestaltungen;
- Fig. 7:: den Querschnitt durch Fig. 6 nach deren Linie VII-VII.

Die Ladefläche 10 eines nicht weiter dargestellten Fahrzeuges ist von Seitenwänden 12 eines Kastenaufbaues 14 flankiert, dessen Kastenstirnwand hier mit 16 und dessen Dach mit 18 bezeichnet sind.

In Abstand q zur Ladefläche 10 überspannt diese ein sog. Zwischenwandverschluss 20, der es ermöglicht, auf der Ladefläche 10 angeordnete Ladegüter 11 für den Transport zu sichern, ohne Veränderungen am Kastenaufbau 14 zu bedingen. Dieser Zwischenwandverschluss 20 weist beidends eines kastenförmigen -- beispielsweise aus einer Aluminiumlegierung stranggepressten -- Hohlprofils 22 der Länge a jeweils ein teilweise in den Profilraum 24 eingeschobenes Spannelement 26 auf, mit dem der Zwischenwandverschluss 20 an einem ortsfesten Profil 30 des Kastenaufbaus 14 -- oder anderweitig -- lösbar festgelegt zu werden vermag.

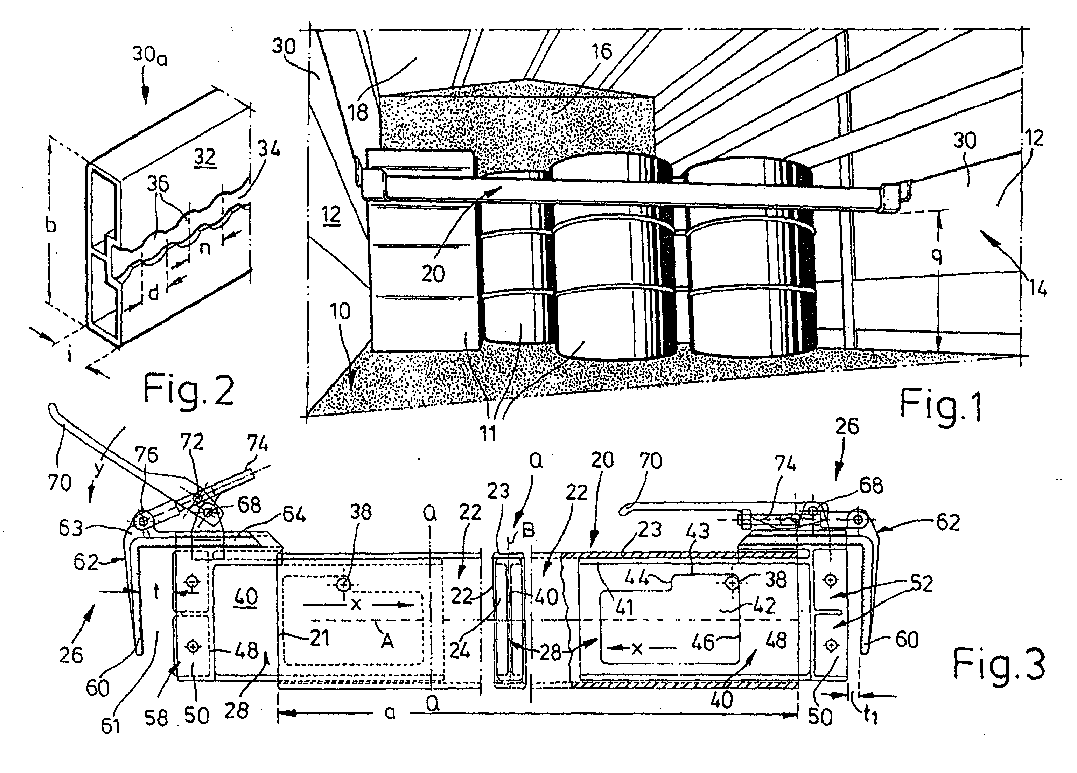

Das Profil kann beispielsweise ein sog. Airline-Profil 30ₐ nach Fig. 2 sein einer Breite b von 100 mm und einer Höhe i von 25 mm mit in Längsmitte seiner Oberfläche 32 verlaufender hinterschnittener Längsnut 34 sowie in diese in Mittenabständen n eingebrachten Bohrungen oder Rundausnehmungen 36 des -- zum Mittenabstand n kürzeren -- Durchmessers d von etwa 20 mm.

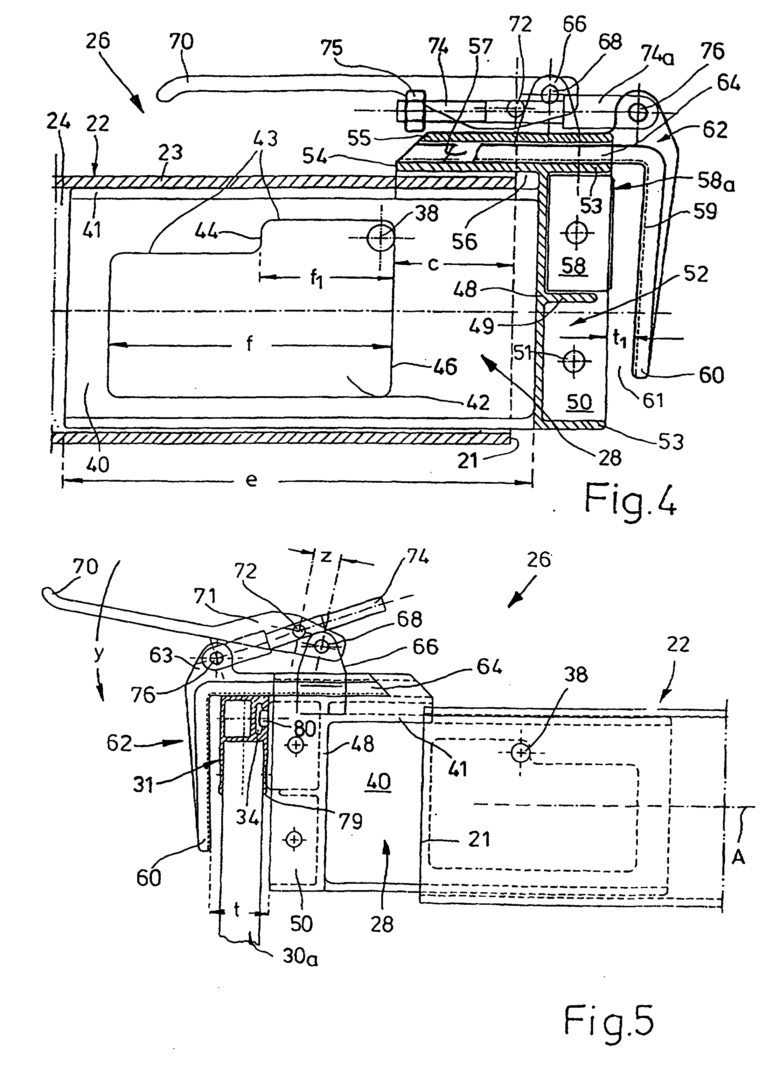

Das Hohlprofil 22 des Zwischenwandverschlusses 20 bietet im Bereich seiner Enden jeweils einen Abschnitt seines Profilraumes 24 zur Aufnahme eines in Einschubrichtung x einführbaren Einschubkörpers 28 des Spannelements 26 an; dieser Einschubkörper 28 der Länge e ist -- entsprechend dem in Fig. 3 beim Pfeil Q angedeuteten Querschnittsbild -- von I-förmigem Querschnitt, und an ihn schmiegt sich das querschnittlich rechteckige Hohlprofil 22, dessen Querschnitts-Hauptachse mit B bezeichnet ist, führend an. Der Vertikalsteg 40 des Einschubkörpers 28 weist einen i.w. rechteckigen Durchbruch 42 auf, dessen Firstkante 43 in einem etwa jenem Abstand f₁ entsprechenden Abstand c zur Profilstirnkante 21 des Hohlprofils 22 in diesem verläuft sowie etwa in der Mitte der Durchbruchlänge f eine vertikale Anschlagstufe 44 bildet. Diese begrenzt mit der in einem horizontalen Abstand f₁ verlaufenden längeren -- rechten -- Seitenkante 46 des Durchbruches 42 einen Schubweg oder eine Kulisse für einen beidends im Hohlprofil 22 festliegenden Querbolzen 38, der in Fig. 3, 4 den Einschubkörper 28 führend hält. Letzterer kann nach Herausdrehen des Querbolzens 38 aus dem Hohlprofil 22 diesem entnommen werden.

Mit dem querschnittlich I-förmigen Einschubkörper 28 ist an dessen -- gegen die Einschubrichtung x weisenden -- Ende eine Querwand 48 fest verbunden. An dieser Querwand 48 sind zwei durch eine etwa in der Längsachse A des Hohlprofils 22 erkennbare Zwischenwand 49 getrennte und von Seitenwänden 50 flankierte -- heckwärts offene -- Aufnahmekammern 52 für quaderartige Hartgummieinsätze 58 zu erkennen. Jene Durchbrüche 51 aufweisende Seitenwände 50 sind endwärts durch zur Zwischenwand 49 parallele Stirnwände 53 verbunden.

Besonders Fig. 4 zeigt, dass oberhalb des Firstflansches 41 des querschnittlich I-förmigen Einschubkörpers 28 und zu ihm in Abstand eine an jene Querwand 48 angeformte Stegwand 54 des Spannelements 26 verläuft, die mit der Stirnwand 53 für die obere Aufnahmekammer 52 einstückig ist. Diese Stegwand 54 begrenzt anderseits mit dem Firstflansch 41 einen Führungsspalt 56 für die Firstwand 23 des Hohlprofils 22.

Deutlich werden die unterschiedlichen Stellungen des Spannelements 26 insbesondere in Fig. 3; ein jeweils den erwähnten Hartgummieinsätzen 58 gegenüberstehender, als Klemmsteg 60 wirkender vertikaler Schenkel eines Winkelstückes 62 des Spannelements 26 bestimmt in Fig. 3 links einen in Öffnungsstellung weiten Spalt 61 der Breite t zur Oberfläche der Hartgummieinsätze 58 von gegebenenfalls mehrfacher Größe der Spaltbreite t₁ in der am rechten Ende des Zwischenwandverschlusses 20 skizzierten Klemmstellung.

Das Winkelstück 62 besteht i.w. aus jenem Klemmsteg 60 sowie einem zweiten Schenkel, der einen Lagersteg 64 bildet; dieser ist oberhalb jener Stegwand 54 in einem weiteren Führungsspalt 57 des Spannelements 26 verschieblich. Der obere Führungsspalt 57 wird gemäß Fig. 4 nach oben hin von einer Firstwand 55 übergriffen, die -- wie auch die zu ihr parallele Stegwand 54 -- mit den Seitenwänden 50 der Aufnahmekammern 52 einstückig ist.

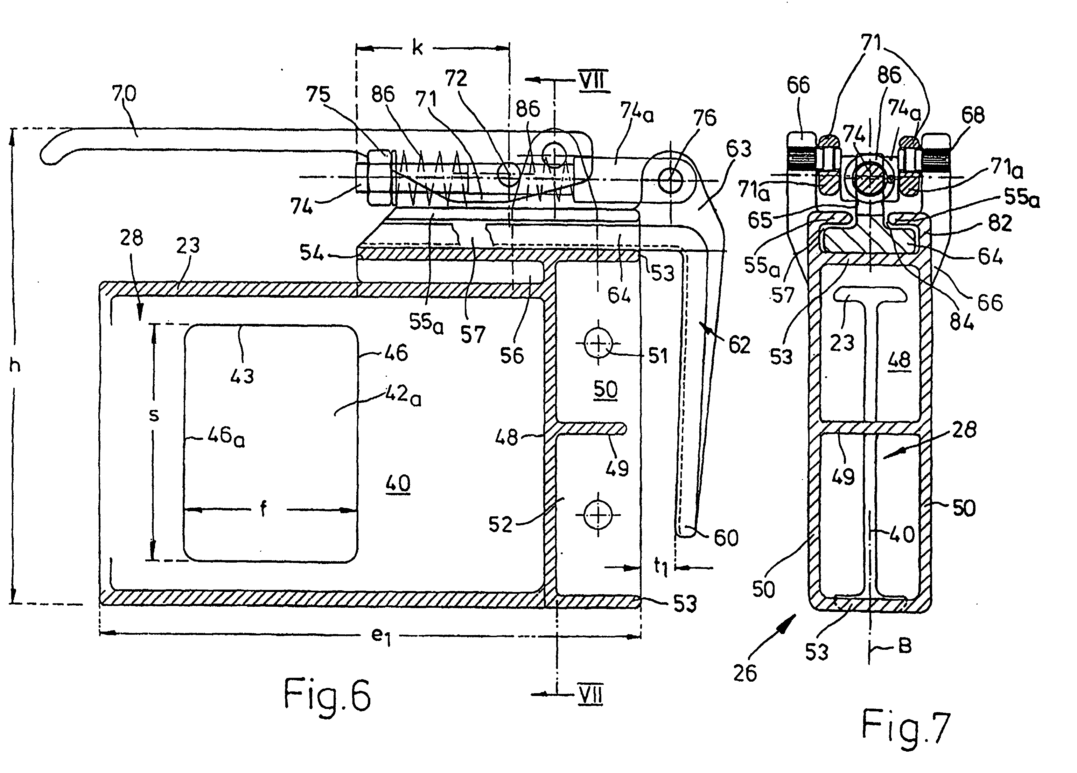

Über die Firstwand 55 ragt ein Paar von Lagerlaschen 66 für einen Schwenkbolzen 68 eines Schwenkhebels 70 auf, dessen gabelartiges Lagerende 71 in Abstand z (Fig. 5) zum Schwenkbolzen 68 ein weiterer Lagerbolzen 72 durchsetzt. Mit diesem wird an den Schwenkhebel 70 ein weiterer Hebel oder Hebelarm 74 angelenkt, dessen eines Ende durch einen Achsbolzen 76 mit einem Lager 63 am Knie des Winkelstückes 62 verbunden ist.

Wird der Schwenkhebel 70 in Öffnungsrichtung y -- Fig. 3, 5 -- geführt, verschiebt sich der Lagersteg 64 des Winkelstücks 62 innerhalb seines Führungsspaltes 57 gegen die Einschubrichtung x, und damit bewegt sich auch der Klemmsteg 60 von den benachbarten, als Gegenklemmfläche dienenden Hartgummieinsätzen 58 weg, ebenso von der entsprechenden Profilstirnkante 21 des Hohlprofils 22. Die beiden sich kreuzenden Hebel 70, 74 erzeugen so in Seitenansicht am Lagerbolzen 72 eine Art "X".

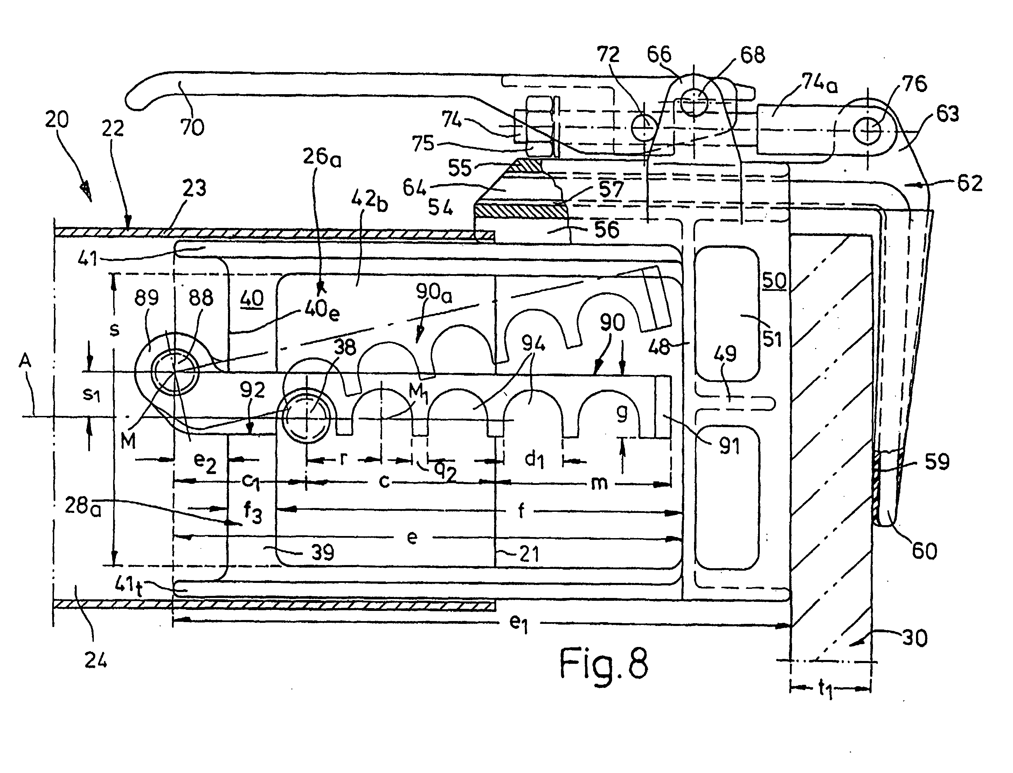

Beim Verschwenken des Schwenkhebels 70 gegen die öffnungsrichtung y -- rechtes Ende der Fig. 3 -- wird das Winkelstück 62 unter Verminderung des Abstandes t profilwärts verschoben; der Lagerbolzen 72 wird um den Schwenkbolzen 68 herumgeführt, und die beiden Hebel 70, 74 werden gleichgerichtet, d.h. in Klemmstellung nach Fig. 4 liegen Schwenkhebel 70 und Hebelarm 74 parallel zum Hohlprofil 22. In Fig. 4, 8 wird im übrigen bei 59 eine elastische Schicht auf der Innenfläche des Klemmsteges 60 angedeutet, welchem die Stirnflächen 58ₐ der quaderartigen Hartgummieinsätze 58 als Gegenklemmfläche/n gegenüberliegen.

Fig. 5 läßt das Zusammenwirken des Spannelements 26 mit einer -- einer Airline-Profilschiene ähnlichen -- Endschiene 31 einer fahrzeugseitigen Profilwand 30ₐ erkennen, auf deren Oberkante sie mit einem Paar paralleler Hal teflanken 79 festgelegt wird. Eine der oben beschriebenen Rundausnehmungen 36 der hinterschnittenen Längsnut 34 nimmt hier das freie Ende eines Schnappbolzens 80 auf, der aus der Oberfläche des oberen Hartgummieinsatzes 58 herausragt.

Das Spannelement 26 der Fig. 6, 7 einer Gesamtlänge e₁ sowie einer Gesamthöhe h weist im Vertikalsteg 40 seines Einschubkörpers 28 einen rechteckigen Durchbruch 42ₐ für den hier nicht wiedergegebenen Querbolzen 38 auf; die gesamte Durchbruchlänge f wirkt hier entsprechend dem Abstand f₁ der Anschlussstufe 44 von der Durchbruchseitenkante 46 im Ausführungsbeispiel der Fig. 3 bis 5. Die Durchbruchlänge f des rechteckigen Durchbruchs 42ₐ ist kürzer als die Durchbruchshöhe s.

Die den oberen Führungsspalt 57 übergreifende Stegwand ist hier durch fluchtende Horizontalschenkel 55ₐ zweier querschnittlich winkelförmiger Flankenwände 82 ersetzt; diese begrenzen einen Längsschlitz 84, in dem ein Halsteil 65 des Lagersteges 64 von Winkelstück 62 geführt wird.

Oberhalb jener Horizontalschenkel 55ₐ der Flankenwände 82 sind in Fig. 7 zwischen den seitlich etwa auskragend angeformten parallelen Lagerlaschen 66 Abschnitte 71ₐ beider Seiten des gabelförmigen Lagerendes 71 des Schwenkhebels 70 angedeutet, die mit den Lagerlaschen 66 durch zwei Schwenkbolzen 68 verbunden sind. Die axiale Länge des Spaltraumes zwischen diesen Abschnitten 71ₐ zum einen und der Abstand k des freien Hebelarmendes von seiner Lagerstelle 72 sind aufeinander abgestimmt; dieses Hebelarmende durchfährt den Spaltraum während des Spannvorganges. Die Spannkraft kann hier durch eine Schraubenfeder 86 eingestellt werden, die den Hebelarm 74 umfängt.

Bei der Ausgestaltung des Zwischenwandverschlusses 20 der Fig. 8 durchgreift der in der Längsachse A angeordnete Querbolzen 38 einen Durchbruch 42_{b}, dessen Länge f größer ist als seine Höhe s. Der mittige Abstand c dieses Querbolzens 38 von der Profilstirnkante 21 entspricht hier etwa der halben Durchbruchslänge f.

Der heckwärtige Teil 39 des Vertikalsteges 40 ist hier als schmaler Streifen ausgebildet, über dessen Heckkante 40ₑ die First- und Fußflansche 41, 41ₜ um ein Maß e₂ hinausragen - dessen Länge entspricht etwa der Breite f₃ des Heckteiles 39 des Vertikalsteges 40. An dessen Heckkante 40ₑ ist eine nicht erkennbare Tragzunge für einen Achsbolzen 88 angeformt, dessen Mittelpunkt M hier im Abstand e₂ zu jener Heckkante 40ₑ liegt, also mit den Heckenden der Flansche 41, 41ₜ etwa fluchtet. Der Mittelpunkt M des Achsbolzens 88 von Spannelement 26ₐ ist zur Längsachse A um ein Maß s₁ von etwa der Breite f₃ des Heckteils 39 höhenversetzt.

Der Achsbolzen 88 durchsetzt einen um ihn schwenkbaren Raststeg 90 der Breite g im Bereich einer aus diesem einends seitenversetzt herausgeformten Gelenklasche 89. Der Raststeg 90 ist andernends mit einer Abwinkelung 91 als Handhabe ausgestattet und ragt um ein -- etwa dem Abstand c entsprechendes -- Kragmaß m über die Profilstirnkante 21 hinaus. Dank dieser ist er um den Achsbolzen 88 in eine bei 90ₐ angedeutete Position aufschwenkbar.

Von der unteren Längskante 92 des Raststeges 90 gehen fünf Randausnehmungen 94 i.w. teilkreisförmiger Kontur aus; deren Durchmesser d₁ ist so gewählt, dass sie den Querbolzen 38 mit geringem Spiel aufzunehmen vermögen. In einer ersten -- in Fig. 8 skizzierten Rastposition nimmt die dem Achsbolzen nächstliegende Randausnehmung 94 den Querbolzen 38 des Hohlprofils 22 auf. Dessen mittiger Abstand c₁ vom Mittelpunkt M des Achsbolzens 88 entspricht etwa einem Drittel der Durchbruchslänge f; der Abstand benachbarter Mittelpunkte M₁ der Randausnehmungen 94 bestimmt ein Rastmaß r, in welchem dieser Einschubkörper 28ₐ -- in fünf Stufen -- gegenüber dem Hohlprofil 22 festgelegt werden kann. Die Länge des Rastmaßes r wird in der dargestellten Ausführung vom Ausnehmungsdurchmesser d₁ sowie dem Abstand a₂ benachbarter Randausnehmungen 94 an der unteren Steglängskante 92 bestimmt.

## Patentansprüche

1. Vorrichtung zum Sichern von Ladegut auf der Ladefläche eines Fahrzeuges od.dgl. Einrichtung in Form eines balkenartigen Profils mit an ihm vorgesehenen Anschlussorganen, insbesondere eines bevorzugt stranggepressten Hohlprofils mit beidends angebrachten hakenähnlichen Anschlussorganen, an denen jeweils ein der Profilstirnkante gegenüberliegender Klemmsteg relativ zur Profilstirnkante bewegbar ist,
**dadurch gekennzeichnet,**
**dass** in das balkenartige Profil bzw. Hohlprofil (22) der Vorrichtung (20) endwärts ein Einschubkörper (28, 28ₐ) eines den Klemmsteg (60) aufweisenden Spannelementes (26, 26ₐ) einführbar ist und im Profilinnenraum (24) in längsachse des Hohlprofils bewegbarge lagert ist.

2. Vorrichtung nach Anspruch 1, **dadurch gekennzeichnet, dass** der Klemmsteg (60) der Schenkel eines in dem Spannelement (26, 26ₐ) verschieblich geführten Winkelstücks (62) ist.

3. Vorrichtung nach Anspruch 1 oder 2, **gekennzeichnet durch** einen lösbar im Hohlprofil (22) festlegbaren Querbolzen (38) als den Profilinnenraum (24) querendes Staborgan zum Führen bzw. Festlegen des Einschubkörpers (28, 28ₐ).

4. Vorrichtung nach einem der Ansprüche 1 bis 3, **dadurch gekennzeichnet, dass** das Hohlprofil (22) von rechteckigem Querschnitt ist sowie eine stegartige Wand (40) des Einschubkörpers (28, 28ₐ) etwa in der Querschnittshauptachse (B) verläuft, wobei die stegartige Wand einen wenigstens teilweise polygonen Durchbruch (42, 42ₐ, 42_{b}) aufweist.

5. Vorrichtung nach einem der Ansprüche 1 bis 4, **dadurch gekennzeichnet, dass** der Einschubkörper (28, 28ₐ) von I-förmigem Querschnitt und der Durchbruch (42, 42ₐ, 42_{b}) in dessen Vertikalsteg (40) vorgesehen ist.

6. Vorrichtung nach einem der Ansprüche 1 bis 5, **dadurch gekennzeichnet, dass** der Einschubkörper (28) des Spannelementes (26) eine zur Längsachse (A) des Hohlprofils (22) etwa parallele Kulisse oder Führungsbahn aufweist sowie in dieser das den Profilinnenraum (24) querende Staborgan (38) führbar angeordnet ist, und/oder dass der Einschubkörper (28) an dem Staborgan oder Querbolzen (38) des Hohlprofils (22) in Einschubrichtung (x) geführt sowie die Länge (f1) des Schubweges von die Kulisse beidseits begrenzenden Anschlagkanten (44, 46; 46, 46ₐ) bestimmt ist.

7. Vorrichtung nach Anspruch 6, **dadurch gekennzeichnet, dass** der Durchbruch (42, 42ₐ) die Kulisse für den Querbolzen (38) begrenzende, quer zur Einschubrichtung (x) verlaufenden Kanten (44, 46; 46, 46ₐ) aufweist und/oder dass die Kulisse von einer Seitenkante (46) des Durchbruches (42) sowie einer dazu etwa parallelen Anschlagstufe (44) der Firstkante (43) des Durchbruches begrenzt ist.

8. Vorrichtung nach einem der Ansprüche 1 bis 5, **dadurch gekennzeichnet, dass** der Einschubkörper (28ₐ) mit zumindest einem an ihm schwenkbar lagernden Rastelement (90) versehen ist, das mit dem Staborgan oder Querbolzen (38) des Hohlprofils (22) so zusammenwirkt, dass in diesem der Einschubkörper in Stufen unterschiedlicher Einschublänge festlegbar ist, wobei gegebenenfalls das Rastelement (90) stegartig ausgebildet und mit von einer Längskante (92) ausgehenden Randausnehmungen (94) versehen sowie der Querbolzen (38) in eine der Rastausnehmungen einsetzbar ist.

9. Vorrichtung nach Anspruch 8, **dadurch gekennzeichnet, dass** das stegartige Rastelement (90) außerhalb des Durchbruches (42_{b},) an einem Achsbolzen (88) des Einschubkörpers (28ₐ) drehbar lagert und die Randausnehmungen (94) in einem dem Durchbruch (42_{b}) zugeordneten Bereich des Rastelementes in einem Rastmaß (r) zueinander von dessen einer Längskante (92) ausgehen, wobei gegebenenfalls mehrere Randausnehmungen (94) in gleichem Rastmaß (r) zueinander vorgesehen sind und/oder der Achsbolzen (88) des Einschubkörpers (28ₐ) parallel sowie um ein Maß (s₁) zum Querbolzen (38) des Hohlprofils (22) höhenversetzt vorgesehen ist.

10. Vorrichtung nach Anspruch 9, **dadurch gekennzeichnet, dass** der Achsbolzen (88) an einer Ausformung der Heckkante (40ₑ) des Einschubkörpers (28ₐ) in Abstand (s₁) zu des letzteren Längsachse (A) angebracht ist.

11. Vorrichtung nach einem der Ansprüche 8 bis 10, **dadurch gekennzeichnet, dass** das einends angelenkte streifenartige Rastelement (90) andernends mit einer Handhabe (91), insbesondere mit einer Abwinkelung, versehen ist.

12. Vorrichtung nach einem der Ansprüche 9 bis 11, **dadurch gekennzeichnet, dass** der Querbolzen (38) in einem Abstand (c) zur Profilstirnkante (21) des Hohlprofils (22) angeordnet ist, welcher etwa der halben Länge (e) des Einschubkörpers (28ₐ) bzw. der halben Länge (f) des Durchbruches (42_{b}) entspricht.

13. Vorrichtung nach wenigstens einem der Ansprüche 1 bis 12, **dadurch gekennzeichnet, dass** zumindest ein Abschnitt eines Firstflansches (41) des Einschubkörpers (28, 28ₐ) einen Führungsspalt (56) des Hohlprofils (22) begrenzt sowie dem Firstflansch parallel eine Stegwand (54) des Spannelements (26, 26ₐ) gegenüber liegt, und/oder dass mit dem Einschubkörper (28, 28ₐ) des Spannelementes (26, 26ₐ) eine Querwand (48) verbunden sowie diese an die Profilstirnkante (21) des Hohlprofils (22) anschlagbar ausgebildet ist.

14. Vorrichtung nach Anspruch 13, **dadurch gekennzeichnet, dass** der Führungsspalt (56) durch die an den Einschubkörper (28, 28ₐ) angefügte Querwand (48) an seinem gegen die Einschubrichtung (x) weisenden Spaltende verschlossen ist, und/oder dass die zum Firstflansch (41) des Einschubkörpers (28) parallele Stegwand (54) in Einschubrichtung (x) beidseits über die Querwand (48) hinauskragt.

15. Vorrichtung nach wenigstens einem der Ansprüche 1 bis 14, **gekennzeichnet durch** einen Führungsspalt (57) des Spannelements (26, 26ₐ) für einen darin bewegbaren Schenkel oder Lagersteg (64) des Winkelstücks (62), dessen anderer Schenkel den Klemmsteg (60) bildet, wobei gegebenenfalls der Führungsspalt (57) zumindest an seinem gegen die Einschubrichtung (x) weisenden Spaltende offen ist.

16. Vorrichtung nach Anspruch 13 und 15, **dadurch gekennzeichnet, dass** beide Führungsspalte (56, 57) parallel zueinander verlaufen.

17. Vorrichtung nach wenigstens einem der Ansprüche 1 bis 16, **dadurch gekennzeichnet, dass** dem in Einschubrichtung (x) bezüglich der etwa parallelen Profilstirnkante (21) hin und her bewegbaren Klemmsteg (60) an dem ihm zugekehrten Ende des Einschubkörpers (28, 28ₐ) eine elastische Gegenklemmfläche (58) gegenüberliegt.

18. Vorrichtung nach wenigstens einem der Ansprüche 1 bis 17, **dadurch gekennzeichnet, dass** die zum Hohlprofil (22) weisende Fläche des Klemmsteges (60) mit einer Schicht (59) aus elastischem Werkstoff versehen ist.

19. Vorrichtung nach Anspruch 13 oder 17, **dadurch gekennzeichnet, dass** in wenigstens einem an der Querwand (48) des Einschubkörpers (28) vorgesehenen Aufnahmeraum (52) ein Einsatz (58) aus Hartgummi od.dgl. Werkstoff festgelegt ist, dessen freie Oberfläche (58ₐ) die elastische Gegenklemmfläche bildet, wobei gegebenenfalls der Aufnahmeraum (52) von der Querwand (48) und an diese angefügte Seitenwände (50) begrenzt ist.

20. Vorrichtung nach einem der Ansprüche 17 bis 19, **dadurch gekennzeichnet, dass** von der Gegenklemmfläche (58ₐ) wenigstens ein Bolzen (80) abragt, der in eine Öffnung (34, 36) eines zwischen die Klemmpartner (58, 60) eingeschobenen Halteprofiles (30ₐ, 30_{b}) einsetzbar ausgebildet ist.

21. Vorrichtung nach wenigstens einem der Ansprüche 1 bis 20, **dadurch gekennzeichnet, dass** an zumindest eine Lageranformung (66) des Spannelementes (26, 26ₐ) an der dem Einschubkörper (28, 28ₐ) abgekehrten Seite der/des Führungsspalte/s (56, 57) mittels eines Schwenkbolzens (58) ein in Richtung der Querschnittshauptachse (B) bewegbarer Schwenkhebel (70) angeschlossen sowie mit diesem der Abstand (t, t₁) zwischen dem Klemmsteg (60) und seiner Gegenklemmfläche (58ₐ) veränderlich einstellbar ist.

22. Vorrichtung nach Anspruch 21, **dadurch gekennzeichnet, dass** von dem Spannelement (26, 26ₐ) Lagerlaschen (66) aufragen, in denen ein das Lagerende (71) des Schwenkhebels (70) durchsetzender Schwenkbolzen (68) sitzt, und/oder dass an den Schwenkhebel (70) in Abstand (z) zu dessen Anlenkstelle (68) ein Hebelarm (74) angelenkt ist, der mittels eines Sockelendes (74ₐ) mit dem Winkelstück (62) gelenkig verbunden ist.

23. Vorrichtung nach Anspruch 22, **dadurch gekennzeichnet, dass** der Hebelarm (74) mit einem Kraftspeicher zusammenwirkt, insbesondere von einer Schraubenfeder (86) umgeben ist (Fig. 6), und/oder dass das Lagerende (71) des Schwenkhebels (70) gabelartig gestaltet und zwischen zwei Abschnitten (71ₐ) dieses Lagerendes der Hebelarm (74) angeordnet ist, wobei dann gegebenenfalls das freie Ende des Hebelarmes (74) zwischen den Abschnitten (71ₐ) des Lagerendes (71) hindurchführbar ausgebildet ist.

24. Vorrichtung nach einem der Ansprüche 21 bis 23, **dadurch gekennzeichnet, dass** dem Knie des Winkelstücks (62) ein Lager (63) für einen dieses sowie das Sockelende (74a) des Hebelarmes (74) durchgreifenden Lagerbolzen (76) zugeordnet ist, und/oder dass bei zum Schwenkhebel (70) etwa parallel liegendem Hebelarm (74) in Klemmstellung der Klemmsteg (60) der Gegenfläche in kurzem Klemmabstand (t₁) gegenübersteht, wobei gegebenenfalls in Klemmstellung der Hebelarm (74) zwischen dem Winkelstück (62) und dem Schwenkhebel (70) verläuft.

25. Vorrichtung nach Anspruch 23 bis 24, **dadurch gekennzeichnet, dass** bei Ausschwenken (Pfeil y) des Schwenkhebels (70) aus der Klemmstellung der Hebelarm (74) durch das Lagerende (71) des Schwenkhebels hindurchschwenkbar ist (Fig. 5).

26. Vorrichtung nach einem der Ansprüche 1 bis 25, **dadurch gekennzeichnet, dass** der Hebelarm (74) außerhalb des mit ihm gelenkig verbundenen Schwenkhebels (70) verläuft sowie an diesem vorbei bewegbar angeordnet ist.

## Claims

1. Device for securing loads on the platform of a vehicle or similar means in the form of a beam-type section with connecting elements provided thereon, in particular a preferably extruded hollow section with hook-like connecting elements mounted at both ends on each of which a clamping web situated opposite the end edge of the section can move relative to the end edge of the section, **characterised in that** a slide-in body (28, 28ₐ) of a clamping element (26, 26ₐ) comprising the clamping web (60) can be introduced into the end of the beam-type section or hollow section (22) of the device (20) and is mounted in the interior (24) of the section in such a manner that it can move along the longitudinal axis of the hollow section.

2. Device according to claim 1, **characterised in that** the clamping web (60) is the leg of an angle section (62) displaceably guided in the clamping element (26, 26ₐ).

3. Device according to claim 1 or claim 2, **characterised by** a transverse bolt (38) which can be removably fixed in the hollow section (22) and serves as a bar element traversing the interior (24) of the section for guiding or fixing the slide-in body (28, 28ₐ).

4. Device according to one of claims 1 to 3, **characterised in that** the hollow section (22) has a rectangular cross section and a web-like wall (40) of the slide-in body (28, 28ₐ) extends substantially along the main axis (B) of the cross section, the web-like wall comprising an at least partially polygonal opening (42, 42ₐ, 42_{b}).

5. Device according to one of claims 1 to 4, **characterised in that** the slide-in body (28, 28ₐ) has an I-shaped cross section and the opening (42, 42ₐ, 42_{b}) is provided in the vertical web (40) thereof.

6. Device according to one of claims 1 to 5, **characterised in that** the slide-in body (28) of the clamping element (26) comprises a groove or guideway substantially parallel to the longitudinal axis (A) of the hollow section (22) and the bar element (38) traversing the interior (24) of the section is arranged in such a manner that it can be guided therein and/or that the slide-in body (28) is guided along the bar element or transverse bolt (38) of the hollow section (22) in the sliding direction (x) and the length (f1) of the sliding path is determined by stop edges (44, 46; 46, 46ₐ) delimiting the groove on both sides.

7. Device according to claim 6, **characterised in that** the opening (42, 42ₐ) comprises edges (44, 46; 46, 46ₐ) extending transversely to the sliding direction (x) and delimiting the groove for the transverse bolt (38) and/or that the groove is delimited by a side edge (46) of the opening (42) and a step (44) of the top edge (43) of the opening substantially parallel thereto.

8. Device according to one of claims I to 5, **characterised in that** the slide-in body (28ₐ) is provided with at least one locking element (90) swivel-mounted thereon and cooperating with the bar element or transverse bolt (38) of the hollow section (22) in such a manner that the slide-in body can be fixed therein in steps of differing length, wherein the locking element (90) may be web-shaped and provided with edge recesses (94) departing from one longitudinal edge (92) and the transverse bolt (38) can be inserted into one of the edge recesses.

9. Device according to claim 8, **characterised in that** the web-like locking element (90) is rotatably mounted on an axle bolt (88) of the slide-in body (28ₐ) outside the opening (42_{b}) and the edge recesses (94) depart from one longitudinal edge (92) of the locking element in a region thereof associated with the opening (42_{b}) at a distance (r) from one another, wherein several edge recesses (94) may be provided at the same distance (r) from one another and/or the axle bolt (88) of the slide-in body (28ₐ) is provided parallel to and vertically offset by an amount (sᵢ) from the transverse bolt (38) of the hollow section (22).

10. Device according to claim 9, **characterised in that** the axle bolt (88) is mounted on a shaped portion on the rear edge (40_{c}) of the slide-in body (28ₐ) at a distance (s₁) from the longitudinal axis (A).

11. Device according to one of claims 8 to 10, **characterised in that** the strip-like locking element (90) hinged at one end is provided at the other end with a handle (91), in particular with a bend.

12. Device according to one of claims 9 to 11, **characterised in that** the transverse bolt (38) is arranged at a distance (c) from the end edge (21) of the hollow section (22) corresponding to approximately half the length (e) of the slide-in body (28ₐ) or half the length (f) of the opening (42_{b}).

13. Device according to at least one of claims 1 to 12, **characterised in that** at least one portion of a top flange (41) of the slide-in body (28, 28ₐ) delimits a guide gap (56) in the hollow section (22) and a web wall (54) of the clamping element (26, 26ₐ) is situated opposite and parallel to the top flange and/or that a transverse wall (48) is connected to the slide-in body (28, 28ₐ) of the clamping element (26, 26ₐ) and is designed in such a manner that it can come to a stop against the end edge (21) of the hollow section (22).

14. Device according to claim 13, **characterised in that** the guide gap (56) is closed at its end pointing in the sliding direction (x) by the transverse wall (48) joined to the slide-in body (28, 28ₐ) and/or that the web wall (54) parallel to the top flange (41) of the slide-in body (28) projects out beyond the transverse wall (48) on both sides in the sliding direction (x).

15. Device according to at least one of claims 1 to 14, **characterised by** a guide gap (57) in the clamping element (26, 26ₐ) for one leg or bearing web (64) of the angle section (62) movable therein, the other leg forming the clamping web (60), wherein the guide gap (57) may be open at least at its end pointing in the sliding direction (x).

16. Device according to claims 13 and 15, **characterised in that** the two guide gaps (56, 57) extend parallel to one another.

17. Device according to at least one of claims 1 to 16, **characterised in that** a flexible mating clamping surface (58) is situated opposite the clamping web (60) movable to and fro in the sliding direction (x) relative to the substantially parallel end edge (21) of the section at the end of the slide-in body (28, 28ₐ) directed towards the clamping web.

18. Device according to at least one of claims 1 to 17, **characterised in that** the surface of the clamping web (60) directed towards the hollow section (22) is provided with a layer (59) of flexible material.

19. Device according to claim 13 or claim 17, **characterised in that** an insert (58) made of hard rubber or a similar material is fixed in at least one receiver (52) provided on the transverse wall (48) of the slide-in body (28), its free surface (58ₐ) forming the flexible mating clamping surface, wherein the receiver (52) may be delimited by the transverse wall (48) and side walls (50) joined thereto.

20. Device according to one of claims 17 to 19, **characterised in that** at least one bolt (80) projects from the mating clamping surface (58ₐ) and is designed in such a manner that it can be inserted into an aperture (34, 36) in a retaining section (30_{a,} 30_{b}) inserted between the clamping partners (58, 60).

21. Device according to at least one of claims 1 to 20, **characterised in that** a swivelling lever (70) movable in the direction of the main axis (B) of the cross section is connected to at least one moulded-on bearing portion (66) on the clamping element (26, 26ₐ) on the side of the guide gap(s) (56, 57) directed away from the slide-in body (28, 28ₐ) by means of a pivot pin (58) and the distance (t, t₁) between the clamping web (60) and its mating clamping surface (58ₐ) can be adjusted by means of this swivelling lever.

22. Device according to claim 21, **characterised in that** bearing straps (66) in which a swivel pin (68) passing through the bearing end (71) of the swivelling lever (70) is seated project from the clamping element (26, 26ₐ) and/or that a lever arm (74) is hinged to the swivelling lever (70) at a distance (z) from its hinge point (68) and is pivoted by means of a bottom end (74ₐ) to the angle section (62).

23. Device according to claim 22, **characterised in that** the lever arm (74) cooperates with an energy storing device, in particular is surrounded by a helical spring (86) (Fig. 6), and/or that the bearing end (71) of the swivelling lever (70) is forkshaped and the lever arm (74) is arranged between two portions (71ₐ) of this bearing end, wherein the free end of the lever arm (74) may then be designed in such a manner that it can pass through between the portions (71ₐ) of the bearing end (71).

24. Device according to one of claims 21 to 23, **characterised in that** a bearing (63) for a bearing bolt (76) passing through the angle of the angle section (62) and the bottom end (74ₐ) of the lever arm (74) is associated with the angle of the angle section and/or that, when the lever arm (74) is situated substantially parallel to the swivelling lever (70) in the clamping position, the clamping web (60) is situated opposite the mating surface at a short distance (t₁) therefrom, wherein the lever arm (74) may extend between the angle section (62) and the swivelling lever (70) in the clamping position.

25. Device according to claims 23 to 24, **characterised in that**, when the swivelling lever (70) swivels out (arrow y) of the clamping position, the lever arm (74) can swivel through the bearing end (71) of the swivelling lever (Fig. 5).

26. Device according to one of claims I to 25, **characterised in that** the lever arm (74) extends outside the swivelling lever (70) pivoted thereto and is arranged in such a manner that it can move past the latter.

## Revendications

1. Dispositif permettant d'assurer des colis sur la plage arrière d'un véhicule ou d'un dispositif similaire se présentant sous la forme d'un profilé de type poutre avec des organes de raccordement qui sont prévus sur celui-ci, en particulier sous la forme d'un profilé creux de préférence extrudé avec des organes de raccordement sous forme de crochets apposés au niveau des deux extrémités, au niveau desquels de chacun la tige de blocage opposée au bord frontal du profilé peut se déplacer par rapport au bord frontal du profilé,
**caractérisé en ce que** dans le profilé de type poutre ou le profilé creux (22) du dispositif (20), on peut introduire en bout un corps encastrable (28, 28ₐ) d'un élément de serrage (26, 26ₐ) présentant la tige de blocage (60) et il est disposé dans l'espace intérieur du profilé (24) en étant mobile dans l'axe longitudinal du profilé creux.

2. Dispositif selon la revendication 1, **caractérisé en ce que** la tige de blocage (60) constitue l'aile d'une pièce coudée (62) guidée dans l'élément de serrage (26, 26ₐ) par translation.

3. Dispositif selon la revendication 1 ou 2, **caractérisé par** un boulon transversal (38) pouvant être fixé de manière amovible dans le profilé creux (22) en tant qu'organe sous forme de tige traversant l'espace intérieur du profilé (24), permettant de guider ou de fixer le corps encastrable (28, 28ₐ).

4. Dispositif selon l'une quelconque des revendications 1 à 3, **caractérisé en ce que** le profilé creux (22) présente une section rectangulaire, et une paroi en forme de tige (40) du corps encastrable (28, 28ₐ) se trouve quasiment dans l'axe principal en coupe transversale (B), moyennant quoi la paroi en forme de tige présente une ouverture (42, 42ₐ, 42_{b}) au moins en partie polygonale.

5. Dispositif selon l'une quelconque des revendications 1 à 4, **caractérisé en ce qu'**il est prévu un corps encastrable (28, 28ₐ) présentant une coupe transversale en forme de I et l'ouverture (42, 42ₐ, 42_{b}) dans cette tige verticale (40).

6. Dispositif selon l'une quelconque des revendications 1 à 5, **caractérisé en ce que** le corps encastrable (28) de l'élément de serrage (26) présente une coulisse ou voie de guidage quasiment parallèle à l'axe longitudinal (A) du profilé creux (22) et **en ce que** l'organe en forme de barre (38) traversant l'espace intérieur du profilé (24) est disposé en pouvant être guidé dans celle-ci, et / ou **en ce que** le corps encastrable (28) est guidé sur l'organe en forme de barre ou boulon transversal (38) du profilé creux (22) dans le sens d'encastrement, et la longueur (f1) de la trajectoire d'encastrement est déterminée des deux côtés par les bords de butée (44, 46 ; 46, 46a) délimitant la coulisse des deux côtés.

7. Dispositif selon la revendication 6, **caractérisé en ce que** l'ouverture (42, 42ₐ) présente des bords (44, 46 ; 46, 46a) transversaux par rapport au sens d'encastrement (x), délimitant la coulisse pour le boulon transversal (38), et / ou **en ce que** la coulisse est délimitée par un bord latéral (46) de l'ouverture (42) et un épaulement de butée (44) qui y est quasiment parallèle du bord supérieur (43) de l'ouverture.

8. Dispositif selon l'une quelconque des revendications 1 à 5, **caractérisé en ce que** le corps encastrable (28ₐ) est doté d'au moins un élément d'enclenchement (90) disposé en pouvant pivoter sur celui-ci, qui coopère de telle sorte avec l'organe en forme de barre ou boulon transversal (38) du profilé creux (22), que le corps encastrable peut être fixé dedans par épaulement représentant différentes longueurs d'encastrement, moyennant quoi, le cas échéant, l'élément d'enclenchement (90) est configuré sous la forme dune tige et peut être doté d'évidements périphériques (94) partant d'un bord longitudinal (92), et le boulon transversal (38) peut être inséré dans l'un des évidements périphériques.

9. Dispositif selon la revendication 8, **caractérisé en ce que** l'élément d'enclenchement en forme de tige (90) est disposé de manière à tourner en dehors de l'ouverture (42_{b}) sur un boulon-pivot (88) du corps encastrable (28ₐ) , et dans une zone de l'élément d'enclenchement affectée à l'ouverture (42_{b}), les évidements périphériques (94) dépassent de l'un de ses bords longitudinaux (92) en présentant un certain degré d'enclenchement (r) les uns par rapport aux autres, moyennant quoi, le cas échéant, plusieurs évidements périphériques (94) sont prévus en présentant le même degré d'enclenchement (r) les uns par rapport aux autres et / ou le boulon-pivot (88) du corps encastrable (28a) est prévu de manière à être parallèle et décalé en hauteur selon une certaine proportion (s₁) par rapport au boulon transversal (38) du profilé creux (22).

10. Dispositif selon la revendication 9, **caractérisé en ce que** le boulon-pivot (88) est placé sur une déformation du bord arrière (40_{c}) du corps encastrable (28ₐ) à une certaine distance (S₁) du dernier axe longitudinal (A).

11. Dispositif selon Tune quelconque des revendications 8 à 10, **caractérisé en ce que** l'éléme d'enclenchement du type tige (90) articulé à une extrémité est doté à l'autre extrémité d'un dispositif de manipulation (91), en particulier avec une courbure en U.

12. Dispositif selon l'une quelconque des revendications 9 à 11, **caractérisé en ce que** le boulon transversal (38) est disposé à une certaine distance (c) du bord frontal (21) du profilé creux (22), qui correspond environ à la moitié de la longueur (e) du corps encastrable (28ₐ) ou à la moitié de la longueur (f) de l'ouverture (42_{b}).

13. Dispositif selon au moins l'une quelconque des revendications 1 à 12, **caractérisé en ce qu'**au moins un fragment d'une bride supérieure (41) du corps encastrable (28, 28ₐ) délimite une fente de guidage (56) du profilé creux (22) et une paroi en forme de tige (54) de l'élément de serrage (26, 26ₐ) est opposée à la bride supérieure en y étant parallèle, et / ou **en ce qu'**une paroi transversale (48) est reliée au corps encastrable (28, 28ₐ) de l'élément de serrage (26, 26a) et elle est configurée de manière à venir en butée contre le bord frontal (21) du profilé creux (22).

14. Dispositif selon la revendication 13, **caractérisé en ce que** la fente de guidage (56) est obturée par la paroi transversale (48) réalisée sur le corps encastrable (28, 28a) au niveau de son extrémité dont l'orientation s'oppose au sens d'encastrement (x), et / ou **en ce que** la paroi en forme de tige (54) parallèle à la bride supérieure (41) du corps encastrable (28) fait saillie des deux côtés par rapport à la paroi transversale (48).

15. Dispositif selon au moins l'une quelconque des revendications 1 à 14, **caractérisé par** une fente de guidage (57) de l'élément de serrage (26, 26ₐ) pour une aile ou la portée (64) de la pièce coudée (62) qui peut se déplacer à l'intérieur, dont l'autre branche constitue la tige de blocage (60), moyennant quoi, le cas échéant, la fente de guidage (57) est au moins ouverte au niveau de son extrémité dont l'orientation s'oppose au sens d'encastrement (x).

16. Dispositif selon la revendication 13 et 15, **caractérisé en ce que** les deux fentes de guidage (56, 57) sont parallèles l'une à l'autre.

17. Dispositif selon au moins l'une quelconque des revendications 1 à 16, **caractérisé en ce qu'**une contre-surface de fixation (58) est opposée à la tige de blocage (60) pouvant effectuer un mouvement de va-et-vient dans le sens d'encastrement (x) par rapport au bord frontal du profilé (21) qui est quasiment parallèle, au niveau de l'extrémité du corps encastrable (28, 28ₐ) orientée vers celui-ci.

18. Dispositif selon au moins Tune quelconque des revendications 1 à 17, **caractérisé en ce que** la surface tournée vers le profilé creux (22) de la tige de blocage (60) est dotée d'une couche (59) réalisée dans un matériau élastique.

19. Dispositif selon la revendication 13 ou 17, **caractérisé en ce que**, dans au moins un espace de réception (52) prévu sur la paroi transversale (48) du corps encastrable (28), il est fixé un accessoire (58) réalisé en ébonite ou dans un matériau similaire, dont la surface libre (58ₐ) forme la contre-surface de fixation élastique, moyennant quoi, le cas échéant, l'espace de réception (52) est délimité par la paroi transversale (48) et à ces parois latérales (50) ajoutées.

20. Dispositif selon l'une quelconque des revendications 17 à 19, **caractérisé en ce qu'**au moins un boulon (80) fait saillie par rapport à la contre-surface de fixation (58a), lequel boulon est configuré de manière à pouvoir être inséré dans un orifice (34, 36) d'un profilé de retenue (30a, 30b) introduit entre les moyens de fixation qui coopèrent (58, 60).

21. Dispositif selon au moins l'une quelconque des revendications 1 à 20, **caractérisé en ce qu'**au moins une configuration de support (66) de l'élément de serrage (26, 26a), sur le côté de la (des) fente(s) de guidage (56, 57) opposée(s) au corps encastrable (28, 28ₐ), est relié à un levier oscillant (70) pouvant se déplacer dans le sens de l'axe principal en coupe transversale (B) à l'aide d'un boulon pivotant et avec celui-ci, la distance (t, t₁) entre la tige de blocage (60) et sa contre-surface de fixation (58ₐ) peut être réglée de manière variable.

22. Dispositif selon la revendication 21, **caractérisé en ce que** des languettes d'appui (66) dépassent de l'élément de serrage (26, 26ₐ), dans lesquelles repose un boulon pivotant (68) traversant l'extrémité de palier (71) du levier pivotant (70), et / ou **en ce que**, sur le levier pivotant (70) est articulé un arbre de levier (74) à une certaine distance (z) de sa position d'articulation (68), lequel arbre de levier est relié de manière articulée à la pièce coudée (62) à l'aide d'une extrémité de socle (74ₐ).

23. Dispositif selon la revendication 22, **caractérisé en ce que** l'arbre de levier (74) coopère avec un accumulateur d'énergie, en particulier il est entouré d'un ressort hélicoïdal (figure 6), et/ou **en ce que** l'extrémité d'appui (71) du levier oscillant (70) est agencée sous la forme d'une fourche et, entre les deux fragments (71ₐ) de cette extrémité de palier est disposé l'arbre de levier (74), moyennant quoi, le cas échéant, l'extrémité libre de l'arbre de levier (74) est configurée entre les fragments (71ₐ) de l'extrémité de palier (71).

24. Dispositif selon l'une quelconque des revendications 21 à 23, **caractérisé en ce que**, au coude de la pièce coudée (62) est affecté un palier (63) pour un tourillon (76) pénétrant dans celui-ci et dans l'extrémité du socle (74a) du bras de levier (74), et / ou **en ce que**, dans le bras de levier (74) quasiment parallèle au levier oscillant (70) dans la position de fixation, la tige de blocage (60) est opposée à la contre-surface en présentant une distance réduite de fixation (t₁), moyennant quoi, le cas échéant, dans la position de fixation, le bras de levier (74) se déplace entre la pièce coudée (62) et le levier oscillant (70).

25. Dispositif selon la revendication 23 ou 24, **caractérisé en ce que**, lors du pivotement (flèche y) du levier oscillant (70) en partant de la position de fixation, le bras de levier (74) peut être amené à pivoter au travers de l'extrémité d'appui (71) du levier oscillant (figure 5).

26. Dispositif selon Tune quelconque des revendications 1 à 25, **caractérisé en ce que** le bras de levier (74) se déplace en dehors du levier oscillant (70) relié à celui-ci en étant articulé, et est disposé de manière à passer devant.
